(19) Europäisches Patentamt
European Patent Office
Office européen des brevets

(11) Veröffentlichungsnummer : **0 158 889**
**B1**

(12) # EUROPÄISCHE PATENTSCHRIFT

(45) Veröffentlichungstag der Patentschrift : **30.11.88**

(51) Int. Cl.⁴ : **C 09 B 29/32**, C 09 B 43/08

(21) Anmeldenummer : **85103729.1**

(22) Anmeldetag : **28.03.85**

(54) **Aminoazoverbindungen, Verfahren zu ihrer Herstellung und ihre Verwendung.**

(30) Priorität : **05.04.84 DE 3412731**

(43) Veröffentlichungstag der Anmeldung : **23.10.85 Patentblatt 85/43**

(45) Bekanntmachung des Hinweises auf die Patenterteilung : **30.11.88 Patentblatt 88/48**

(84) Benannte Vertragsstaaten : **CH DE FR GB IT LI**

(56) Entgegenhaltungen :
**EP-A- 0 061 728**
**DE-B- 1 266 422**
**FR-A- 2 224 524**
**FR-A- 2 239 495**
**GB-A- 2 001 667**

(73) Patentinhaber : **HOECHST AKTIENGESELLSCHAFT**
**Postfach 80 03 20**
**D-6230 Frankfurt am Main 80 (DE)**

(72) Erfinder : **Hunger, Klaus, Dr.**
**Johann-Strauss-Strasse 35**
**D-6233 Kelkheim (Taunus) (DE)**

**EP 0 158 889 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf Aminoazoverbindungen, die als Ausgangsstoffe für neue Disazoverbindungen, vorzugsweise Disazopigmente dienen.

Gegenstand der Erfindung sind Aminoazoverbindungen der Formel I

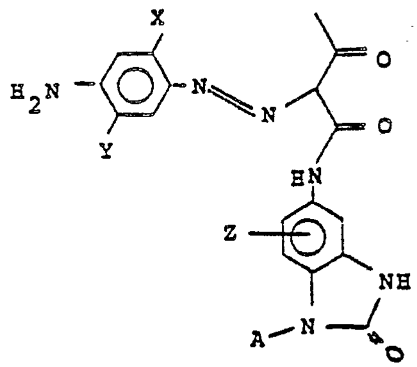

(I)

in der X und Y gleich oder verschieden sind und Wasserstoff, Chlor oder Brom, eine Methyl-, Methoxy, Ethoxy-, Nitro-, Trifluormethyl-, Carbomethoxy- oder Carboethoxygruppe bedeuten, A Wasserstoff, eine Methyl- oder Ethylgruppe darstellt und Z in 6- oder 7-Stellung des heteroaromatischen Ringsystems Wasserstoff, Chlor oder Brom, eine Methyl-, Methoxy-, Ethoxy-, Carbomethoxy-, Carboethoxy- oder Nitrogruppe ist.

Bevorzugt sind Verbindungen der Formel I, in der X und Y gleich oder verschieden sind und Wasserstoff, Chlor, eine Methyl, Methoxy-, Ethoxy-, Carbomethoxy-, Carboethoxy- oder Nitrogruppe bedeuten und A sowie Z ein Wasserstoffatom ist, insbesondere aber solche Verbindungen, bei denen X und/oder Y Wasserstoff, Chlor, eine Methyl-, Methoxy-, Carbomethoxy, oder Nitrogruppe darstellen und A sowie Z unverändert ein Wasserstoffatom ist.

Ein weiterer Gegenstand der Erfindung ist ein Verfahren zur Herstellung der Aminoazoverbindungen der Formel I, das dadurch gekennzeichnet ist, daß man Verbindungen der Formel II

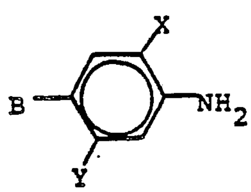

(II)

in der B eine Amino- oder Nitrogruppe ist und X und Y die oben angegebene Bedeutung haben

a) im Falle, daß B eine Aminogruppe ist, diese 1,4-Diaminobenzole im wäßrigen Medium monodiazotiert und mit einer Verbindung aus der Reihe der 5-Acetoacetyl-aminobenzimidazolone der Formel III kuppelt,

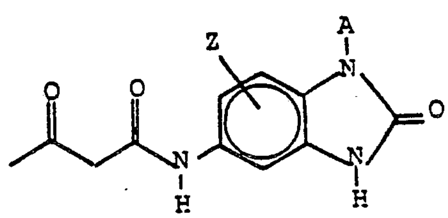

(III)

wobei A und Z die bei Formel I genannten Bedeutung aufweisen, oder

b) im Falle, daß B eine Nitrogruppe ist, X und Y die oben angegebene Bedeutung haben, jedoch keine Nitrosubstituenten darstellen, dieses 4-Nitroanilin diazotiert und die Diazoniumverbindung auf ein unter a) genanntes Benzimidazolonderivat der Formel III, das keine Nitrogruppen aufweist, kuppelt und die erhaltene Nitroazoverbindung der Formel IV

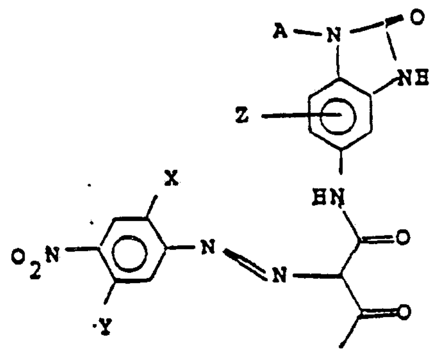

(IV)

in der X, Y, Z und A die bei Formel I genannten Bedeutungen haben, zur Aminoazoverbindung I reduziert.

Die Monodiazotierung von im Kern halogenierten 1,4-Diaminobenzolen ist aus der DE-PS 586 355 bekannt. Bei diesem Verfahren werden die Verbindungen mit der zur Diazotierung einer Aminogruppe nötigen Menge Mineralsäure und salpetriger Säure einseitig diazotiert und die so erhaltenen Diazoverbindungen in fester Form durch Salzzugabe ausgefällt.

Die Monodiazotierung der 1,4-Diaminobenzole der Formel II kann aber auch beispielsweise gemäß DE-OS 2 555 515 erfolgen, indem man das betreffende 1,4-Diaminobenzol in Wasser oder in einem Gemisch aus Wasser und einem mit Wasser mischbaren Lösemittel, beispielsweise Methanol, Ethanol, Aceton, Dioxan, Formamid, Dimethylformamid, Dimethylsulfoxid, Tetrahydrofuran, Ethylenglykol, Diethylenglykoldimethylether und/oder N-Methylpyrrolidon, im pH-Bereich von 1 bis 4, vorzugsweise 1,5 bis 3,5 in Gegenwart von Mineralsäuren, beispielsweise von Schwefelsäure oder Phosphorsäure, insbesondere von Halogenwasserstoffsäuren, wie Salzsäure, oder in Gegenwart von niedermolekularen organischen Säuren, beispielsweise Oxalsäure oder Chloressigsäure, insbesondere Essigsäure oder in Gegenwart eines Gemisches einer Mineralsäure mit einer niedermolekularen organischen Säure, beispielsweise einem Gemisch aus Phosphorsäure und Propionsäure, oder Salzsäure und Essigsäure, oder Schwefelsäure und Essigsäure diazotiert.

Die Temperatur bei der Diazotierung kann in einem weiten Bereich, beispielsweise von — 10° bis + 30 °C, schwanken. Bevorzugt diazotiert man jedoch bei 0° bis + 5 °C.

Auch die Dauer der Diazotierung kann man stark variieren. In der Regel benötigt man 5 bis 120 Minuten.

Bei der anschließenden Kupplung kann es von Nutzen sein, beispielsweise zur Erzielung einer günstigen Korngrößenverteilung und/oder zur Beeinflussung der Reaktionsgeschwindigkeit, einen Zusatz von oberflächenaktiven Mitteln zu verwenden, z. B. nichtionogene, anionaktive oder kationaktive Dispergiermittel.

Solche oberflächenaktive Mittel sind z. B. anionaktive Substanzen wie Fettsäuretauride, Fettsäure-N-methyltauride, Fettsäureisäthionate, Alkylbenzolsulfonate, Alkylnaphthalinsulfonate, Alkylphenolpolyglykolethersulfate und Fettalkoholpolyglykolethersulfate, Fettsäuren, z. B. Palmitin-, Stearin- und Ölsäure, Seifen, z. B. Alkalisalze von Fettsäuren, Naphthensäure und Harzsäuren, z. B. Abietinsäure, alkalilösliche Harze, z. B. kolophoniummodifizierte Maleinatharze, kationaktive Substanzen, wie quartäre Ammoniumsalze, N-oxide tertiärer Amine bzw. ihrer Salze, Fettamine und ihre oxethylierten Derivate, nichtionogene Substanzen wie Fettalkoholpolyglykolether (ethoxylierte Fettalkohole), Fettsäurepolyglykolester, Alkylphenolpolyglykolether und Dialkylpolyglykolether.

Die oberflächenaktiven Mittel können einzeln oder auch als Gemisch zugesetzt werden. Die Menge kann in weiten Grenzen schwanken, wobei im allgemeinen 0,1 bis 20 Gew.-%, vorzugsweise 2 bis 10 Gew.-%, bezogen auf eine 100 %ige Pigment-Ausbeute eingesetzt werden.

Bei der Kupplung geht man zweckmäßigerweise so vor, daß man die Kupplungskomponente, vorzugsweise in wäßriger Alkalilauge, löst, mit Säure wieder ausfällt und schließlich mit der erhaltenen Suspension die Kupplung bei 10 bis 80, vorzugsweise 15 bis 35 °C durchführt.

Die Kupplung kann auch in Gegenwart organischer Lösemittel durchgeführt werden, z. B. Eisessig, niederen Alkanolen, Dioxan, Formamid, Dimethylformamid, Dimethylsulfoxid, Pyridin oder N-Methylpyrrolidon. Die nach der Kupplung erhaltene Suspension wird 10 bis 30 Minuten auf 80 bis 100 °C geheizt, das erhaltene Pigment abgesaugt, salzfrei gewaschen und getrocknet.

Die Reduktion der Nitroazoverbindungen der Formel IV, die aufgrund ihrer Konstitutionen stabile Azobrücken besitzen, erfolgt im allgemeinen nach herkömmlichen Methoden z. B. durch Eisen- oder Sulfhydrat-Reduktion oder mit anderen Reduktionsmitteln, aber auch katalytisch mit Wasserstoff. Als Lösemittel, in der die Reduktion erfolgt, sind neben Wasser alle gegen Reduktionen inerte organische Lösemittel, beispielsweise Alkanole, aprotische Lösungsmittel wie Dimethylformamid, Dimethylsulfoxid, N-Methylpyrrolidon, aromatische Kohlenwasserstoffe wie Toluol und die verschiedenen Xylole geeignet.

Nach der katalytisch durchgeführten Reduktion, beispielsweise mit Wasserstoff/Raney-Nickel, wird vom Lösemittel abfiltriert, die Aminoazoverbindung mit wäßriger Salzsäure bei Zimmertemperatur verrührt, bis das metallische Nickel in Nickelchlorid überführt ist und anschließend filtriert, salzfrei und

neutral gewaschen und getrocknet. Wenn die Aminoazoverbindung in den Lösemitteln löslich ist, wird der Katalysator nach der Reduktion abfiltriert und die Aminoazoverbindung isoliert.

Die neuen Aminoazoverbindungen werden als Ausgangsprodukte zur Herstellung von Disazoverbindungen, vorzugsweise von Disazopigmenten verwendet, wobei sie auf üblichem Wege diazotiert und auf kupplungsfähige Verbindungen, z. B. auf 5-Acetoacetylaminobenzimidazolone gekuppelt werden. Die auf diese Weise erhaltenen Disazopigmente zeichnen sich durch besonders gute Eigenschaften wie hohe Farbstärke, hervorragende Lösemittel- und Migrationsechtheit, sehr gute Thermostabilität und Lichtechtheit aus.

In den nachfolgenden Beispielen erfolgen die Prozentangaben in Gewichtsprozent.

## Beispiele

1. Verfahren a) 10,8 g 1,4-Diaminobenzol wurden in 100 ml Wasser und 40 ml 5n Salzsäure gelöst und auf 5 °C abgekühlt. Innerhalb einer Stunde wurden 50,3 ml 2n Natriumnitritlösung zugetropft. Der pH-Wert stieg dabei von 2 auf 3,5 an, wobei am Ende der Zugabe ein schwacher Nitritüberschuß festgestellt wurde. Es wurde 30 Minuten nachgerührt und der Ansatz mit Kohle und Kieselgur geklärt.

24 g 5-Acetoacetylaminobenzimidazolon wurden in einem Gemisch aus 18 ml Natronlauge (33 %ig) und 300 ml Wasser gelöst. Durch Zutropfen von 10,5 ml Eisessig in 100 ml Wasser wurde ein pH-Wert von 9 eingestellt, wobei die Kupplungskomponente vollständig ausgefällt wurde. Zu der Ausfällung wurde innerhalb von 30 Minuten bei 30 °C die Lösung der Diazokomponente zugetropft, wobei der pH-Wert von 9 durch wechselseitige Zugabe von insgesamt 200 ml einer 3 %igen Natriumcarbonat-Lösung eingehalten wurde. Nach Beendigung der Kupplungsreaktion wurde mit 2 %iger Salzsäure auf pH 7 gestellt und 30 Minuten bei 95 °C erhitzt. Der orangefarbene Niederschlag wurde abfiltriert, salzfrei gewaschen und getrocknet, wobei 30,3 g (86,1 % der Theorie) eines orangefarbenen Pulvers der Formel

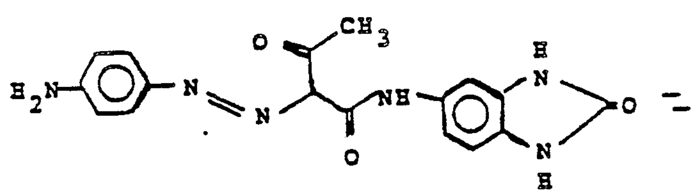

mit Schmelzpunkt 288 °C erhalten wurden.

2. Verfahren b) 50 g der durch Kupplung von diazotiertem 4-Nitroanilin auf 5-Acetoacetylaminobenzimidazolon erhaltene 4-Nitrophenylazoverbindung wurden in 500 ml N-Methylpyrrolidon mit 3 g Raney-Nickel bei 80 °C und 50 bar Wasserstoffdruck hydriert. Die orangefarbene Suspension wurde dann mit N-Methylpyrrolidon auf ein Volumen von 3 l verdünnt, bei 100 °C gelöst und vom Nickelkatalysator abfiltriert. Unter vermindertem Druck wurde bei 80-100 °C auf ca. 1 l Volumen eingeengt, das orangefarbene Produkt abgesaugt, mit Ethanol gewaschen und getrocknet. Ausbeute 43,7 g (94,8 % der Theorie), Fp. 288 °C.

Nach den erfindungsgemäßen Verfahren lassen sich weitere Aminoazoverbindungen herstellen, die in der nachfolgenden Tabelle genannt sind, wobei X, Y, A und Z die in der Formel I angeführten Positionen besitzen :

| Beispiel | Verfahren | X | Y | A | Z | Fp. °C | Ausbeute (% d.Th.) |
|---|---|---|---|---|---|---|---|
| 3 | a | Cl | Cl | H | H | 320 | 83,1 |
| 4 | a,b | $OCH_3$ | $OCH_3$ | H | H | 274 | a) 76.4 b) 81.2 |
| 5 | a,b | Cl | H | H | H | 297 | a) 89.6 b) 95.4 |
| 6 | a,b | $CH_3$ | $CH_3$ | H | H | 298 | a) 88.4 b) 93.3 |
| 7 | b | $OCH_3$ | H | H | H | 282 | 87.3 |
| 8 | b | $CH_3$ | H | H | H | 265 | 69.5 |
| 9 | b | H | $CF_3$ | H | H | 305 | 85.2 |
| 10 | a | H | H | H | 6-Cl | 292 | 69.7 |
| 11 | a | H | H | $CH_3$ | H | 271 | 96.2 |
| 12 | a | Cl | Cl | H | 7-Cl | 282 | 96.2 |
| 13 | a | Cl | Cl | $CH_3$ | H | 282 | 91.6 |

(Fortsetzung)

| Beispiel | Verfahren | X | Y | A | Z | Fp.°C | Ausbeute (% d.Th.) |
|---|---|---|---|---|---|---|---|
| 14 | a | Cl | Cl | H | 6-Cl | 306 | 83.2 |
| 15 | b | $OCH_3$ | H | H | 6-Cl | 265 | 92.0 |
| 16 | b | $CH_3$ | $CH_3$ | H | 6-Cl | 255 | 90.7 |
| 17 | b | $COOCH_3$ | H | H | H | 284 | 98.7 |
| 18 | a | Cl | H | H | 7-Cl | 278 | 95.1 |
| 19 | b | $CH_3$ | H | $CH_3$ | H | 245 | 84.5 |
| 20 | b | Cl | H | $CH_3$ | H | 284 | 87.3 |
| 21 | b | Cl | H | H | 6-Cl | 278 | 79.8 |
| 22 | a | $NO_2$ | H | H | H | 304 | 98.2 |
| 23 | a | Cl | H | H | $6\text{-}OCH_3$ | 282 | 96.0 |

**Patentansprüche**

1. Aminoazoverbindungen der Formel I

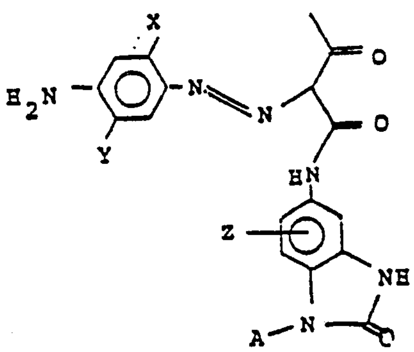

(I)

in der X und Y gleich oder verschieden sind und Wasserstoff, Chlor oder Brom, eine Methyl-, Methoxy-Ethoxy-, Nitro-, Trifluormethyl-, Carbomethoxy- oder Carboethoxygruppe bedeuten, A Wasserstoff, eine Methyl- oder Ethylgruppe darstellt und Z in 6- oder 7-Stellung des heteroaromatischen Ringsystems Wasserstoff, Chlor oder Brom, eine Methyl-, Methoxy-, Ethoxy-, Carbomethoxy-, Carboethoxy- oder Nitrogruppe ist.

2. Aminoazoverbindungen nach Anspruch 1, dadurch gekennzeichnet, daß X und Y gleich oder verschieden sind und ein Wasserstoff, Chlor, eine Methyl-, Methoxy-, Carbomethoxy- oder Nitrogruppe bedeuten und A sowie Z Wasserstoff ist.

3. Verfahren zur Herstellung von Aminoazoverbindungen der Formel I aus Anspruch 1, dadurch gekennzeichnet, daß man Verbindungen der Formel II

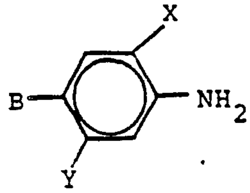

in der B eine Amino- oder Nitrogruppe ist, X und Y gleich oder verschieden sind und Wasserstoff, Chlor oder Brom, eine Methyl-, Methoxy-, Ethoxy-, Nitro-, Trifluormethyl, Carbomethoxy- oder Carboethoxygruppe bedeuten,

a) im Falle, daß B eine Aminogruppe ist, diese 1,4-Diaminobenzole in wäßrigem Medium monodiazotiert und mit einer Verbindung aus der Reihe der 5-Acetoacetylaminobenzimidazole der Formel III kuppelt,

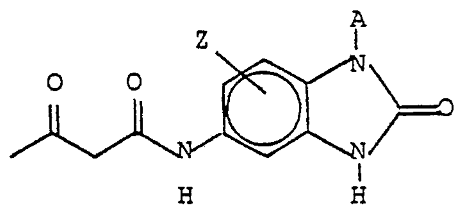

(III)

in der A Wasserstoff, eine Methyl- oder Ethylgruppe darstellt und Z in 6- oder 7-Stellung des heteroaromatischen Ringsystems Wasserstoff, Chlor oder Brom, eine Methyl-, Methoxy-, Ethoxy-, Carbomethoxy-, Carboethoxy- oder Nitrogruppe ist, oder

b) im Falle, daß B eine Nitrogruppe ist, X und Y die oben angegebenen Bedeutungen haben, jedoch keine Nitrosubstituenten darstellen, dieses 4-Nitroanilin diazotiert und die Diazoniumverbindung auf ein unter a) genanntes Benzimidazolonderivat der Formel III kuppelt, das keine Nitrogruppen aufweist, und dann die erhaltene Nitroazoverbindung der Formel IV

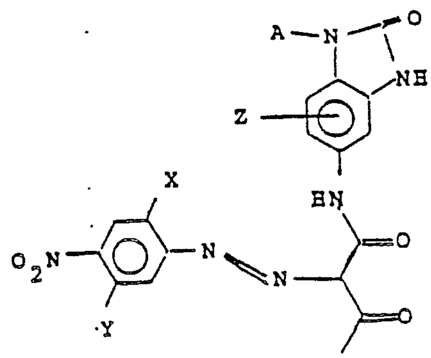

(IV)

zur Aminoazoverbindung der Formel I reduziert.

4. Verfahren nach Anspruch 3, dadurch gekennzeichnet, daß Verbindungen der Formel II, in denen X und Y gleich oder verschieden sind und Wasserstoff, Chlor-, eine Methyl-, Methoxy-, Carbomethoxy- oder Nitrogruppe bedeuten, und Verbindungen der Formel III, in denen A und Z Wasserstoff ist, eingesetzt werden.

5. Verfahren nach Anspruch 3 oder 4, dadurch gekennzeichnet, daß die Diazotierung bei — 10 bis + 30 °C, vorzugsweise bei 0 bis + 5 °C durchgeführt wird.

6. Verfahren nach einem oder mehreren der Ansprüche 3 bis 5, dadurch gekennzeichnet, daß die Kupplung bei 10 bis 80, vorzugsweise 15 bis 35 °C, durchgeführt wird.

7. Verfahren nach einem oder mehreren der Ansprüche 3 bis 6, dadurch gekennzeichnet, daß die Kupplung in Gegenwart von anionaktiven, kationaktiven oder nichtionogenen Dispergiermitteln in Mengen von 0,1 bis 20, vorzugsweise 2 bis 10 Gew.-%, bezogen auf eine 100 %ige Pigment-Ausbeute, vorgenommen wird.

8. Verfahren nach einem oder mehreren der Ansprüche 3 bis 7, dadurch gekennzeichnet, daß die Reduktion der Nitroazoverbindung der Formel IV durch Eisen- oder Sulfhydrat-Reduktion oder katalytisch mit Wasserstoff erfolgt.

9. Verwendung der Aminoazoverbindungen der Formel I gemäß Anspruch 1, als Ausgangsprodukte zur Herstellung von Disazoverbindungen, vorzugsweise von Disazopigmenten.

## Claims

1. An aminoazo compound of the formula I

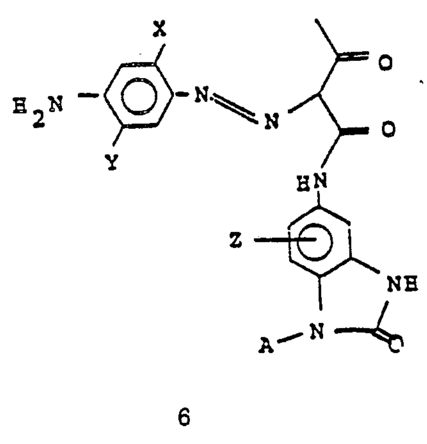

(I)

in which X and Y are identical or different and denote hydrogen, chlorine, bromine or a methyl, methoxy, ethoxy, nitro, trifluoromethyl, carbomethoxy or carboethoxy group, A represents hydrogen or a methyl or ethyl group, and Z in the 6- or 7-position of the heteroaromatic ring system is hydrogen, chlorine, bromine or a methyl, methoxy, ethoxy, carbomethoxy, carboethoxy or nitro group.

2. An aminoazo compound as claimed in claim 1, wherein X and Y are identical or different and denote hydrogen, chlorine or a methyl, methoxy, carbomethoxy or nitro group and A and Z are both hydrogen.

3. A process for preparing aminoazo compounds of the formula I of claim 1 which comprises taking compounds of the formula II

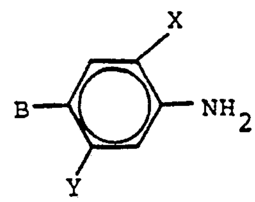

(II)

in which B is an amino or nitro group and X and Y are identical or different and denote hydrogen, chlorine, bromine or a methyl, methoxy, ethoxy, nitro, trifluoromethyl, carbomethoxy or carboethoxy group, and

(a) in the case where B is an amino group, monodiazotizing these 1,4-diaminobenzenes in an aqueous medium and coupling the diazonium salt with a 5-acetoacetylaminobenzimidazolone compound of the formula III

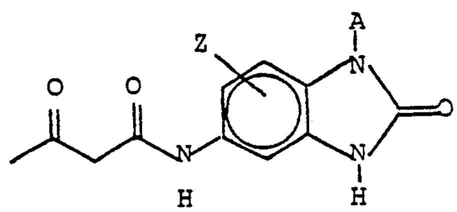

(III)

where A is hydrogen, a methyl or ethyl group, and Z in the 6- or 7-position of the heteroaromatic ring system is hydrogen, chlorine, bromine or a methyl, methoxy, ethoxy, carbomethoxy, carboethoxy or nitro group, or

(b) in the case where B is a nitro group and X and Y are as defined above but do not represent nitro substituents, diazotizing this 4-nitroaniline and coupling the diazonium compound onto a nitro-free benzimidazolone derivative of the formula III mentioned in (a), and reducing the resulting nitroazo compound of the formula IV

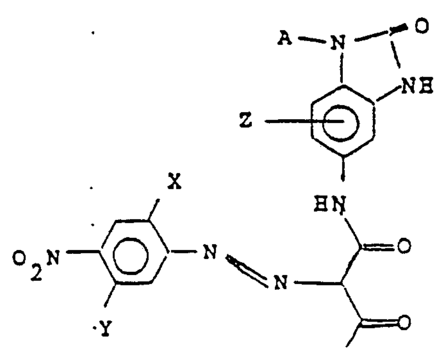

(IV)

to the aminoazo compound of the formula I.

4. The process as claimed in claim 3, wherein, in the compounds of the formula II used, X and Y are identical or different and denote hydrogen, chlorine or a methyl; methoxy, carbomethoxy or nitro group, and in the compounds of the formula III used, A and Z are both hydrogen.

5. The process as claimed in claim 3 or 4 wherein the diazotization is carried out at — 10 to + 30 °C, preferably at 0 to + 5 °C.

6. The process as claimed in one or more of claims 3 to 5, wherein the coupling is carried out at 10 to 80, preferably 15 to 35, °C.

7. The process as claimed in one or more of claims 3 to 6, wherein the coupling is carried out in the presence of anionic, cationic or nonionic dispersants in amounts of 0.1 to 20, preferably 2 to 10, % by weight, based on a 100 % strength pigment yield.

8. The process as claimed in one or more of claims 3 to 7, wherein the reduction of the nitroazo compound of the formula IV is effected by reduction with iron or hydrosulfide or catalytically with hydrogen.

9. Use of the aminoazo compound of the formula I as claimed in claim 1, as starting materials for preparing disazo compounds, preferably disazo pigments.

**Revendications**

1. Composés aminoazoïques de formule I

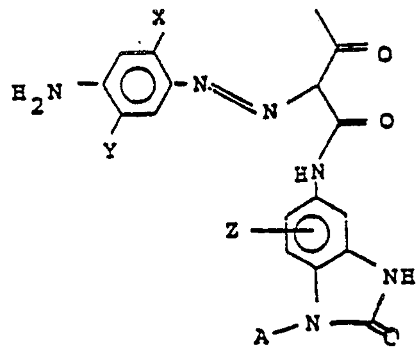

(I)

dans laquelle X et Y sont identiques ou différents et représentent chacun un hydrogène, le chlore ou le brome, ou un groupe méthyle, méthoxy, éthoxy, nitro, trifluorométhyle, carbométhoxy ou carboéthoxy, A est un hydrogène, un groupe méthyle ou éthyle, et Z, en position 6 ou 7 du système cyclique hétéroaromatique, est un hydrogène, le chlore ou le brome, ou encore un groupe méthyle, méthoxy, éthoxy, carbométhoxy, carboéthoxy ou nitro.

2. Composés aminoazoïques selon la revendication 1, caractérisés en ce que X et Y sont identiques ou différents et représentent chacun un hydrogène, le chlore, ou un groupe méthyle, méthoxy, carbométhoxy ou nitro, et A et Z sont chacun un hydrogène.

3. Procédé pour la préparation de composés aminoazoïques de formule I selon la revendication 1, caractérisé en ce qu'on prend des composés de formule II

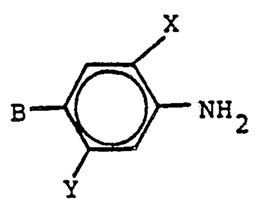

dans laquelle B est un groupe amino ou nitro, X et Y sont identiques ou différents et représentent chacun un hydrogène, le chlore ou le brome, ou un groupe méthyle, méthoxy, éthoxy, nitro, trifluorométhyle, carbométhoxy ou carboéthoxy, et que

a) si B est un groupe amino, on monodiazote ces diamino-1,4 benzènes en milieu aqueux, et on les copule à l'aide d'un composé de la série des acétoacétylamino-5 benzimidazoles de formule III

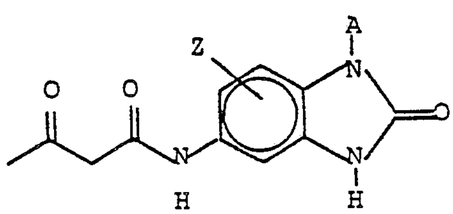

(III)

dans laquelle A est un hydrogène ou un groupe méthyle ou éthyle, et Z en position 6 ou 7 du noyau cyclique hétéro-aromatique, est un hydrogène, le chlore ou le brome, ou un groupe méthyle, méthoxy, éthoxy, carbométhoxy, carboéthoxy ou nitro, ou bien que

b) si B est un groupe nitro, que X et Y ont chacun les significations données ci-dessus mais ne représentent aucun substituant nitro, on diazote cette nitro-4 aniline et on copule le composé de diazonium sur un dérivé de benzimidazolone de formule III mentionné en a), ne comportant pas de groupes nitro, puis qu'on réduit le composé nitroazoïque obtenu de formule IV

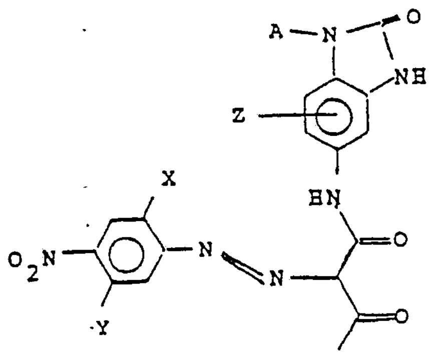

(IV)

pour obtenir le composé aminoazoïque de formule I.

4. Procédé selon la revendication 3, caractérisé en ce qu'on utilise des composés de formule II où X et Y sont identiques ou différents et sont chacun un hydrogène, le chlore, un groupe méthyle, méthoxy, carbométhoxy ou nitro, ainsi que les composés de formule III où A et Z sont chacun un hydrogène.

5. Procédé selon la revendication 3 ou 4, caractérisé en ce que la diazotation est mise en œuvre entre — 10 et + 30 °C, de préférence entre 0 et + 5 °C.

6. Procédé selon une ou plusieurs des revendications 3 à 5, caractérisé en ce que la copulation a lieu entre 10 et 80, de préférence entre 15 et 35 °C.

7. Procédé selon une ou plusieurs des revendications 3 à 6, caractérisé en ce que la copulation est mise en œuvre en présence de dispersants anioniques, cationiques ou non-ioniques, en des quantités de 0,1 à 20, de préférence de 2 à 10 % en poids par rapport à un rendement pigmentaire de 100 %.

8. Procédé selon une ou plusieurs des revendications 3 à 7, caractérisé en ce que la réduction du composé nitroazoïque de formule IV a lieu par réduction au fer ou au sulfhydrate, ou encore par un moyen catalytique, avec de l'hydrogène.

9. Utilisation des composés aminoazoïques de formule I selon la revendication 1, comme produits de départ pour préparer des composés de disazotation, de préférence dans les pigments de disazotation.